**Europäisches Patentamt**

**European Patent Office**

**Office européen des brevets**

(11) Veröffentlichungsnummer: **0 046 726**

**A1**

(12) ## EUROPÄISCHE PATENTANMELDUNG

(21) Anmeldenummer: **81730082.5**

(22) Anmeldetag: **24.08.81**

(51) Int. Cl.³: **F 24 J 3/02**
**F 16 L 39/00, F 16 L 37/00**

(30) Priorität: **22.08.80 DE 3032107**

(43) Veröffentlichungstag der Anmeldung:
**03.03.82 Patentblatt 82/9**

(84) Benannte Vertragsstaaten:
**BE IT**

(71) Anmelder: **Hampe, Andreas, Dr.-Ing.**
**Lotzestrasse 7**
**D-1000 Berlin 45(DE)**

(72) Erfinder: **Hampe, Andreas, Dr.-Ing.**
**Lotzestrasse 7**
**D-1000 Berlin 45(DE)**

(74) Vertreter: **Christiansen, Henning, Dipl.-Ing.**
**Unter den Eichen 108a**
**D-1000 Berlin 45(DE)**

(54) **Erdwärmetauscherelement.**

(57) Erdwärmetauscherelement mit einem Außen- und einem Inenrohr und einem als Formstück ausgebildeten Sammelleitungs-Anschlußkopf, wobei der Anschlußkopf (3) zur Aufnahme von Außen- und Innenrohr (1 bzw. 2) eine an seine Außenfläche angrenzende, mit ihrem Innendurchmesser an den Außendurchmesser des Außenrohres angepaßte erste Ausnehmung (6), eine an die vorige anschließende, von dieser durch eine Durchmesserverringerung getrennte, zweite Ausnehmung (7), welche mit dem Inneren eines ersten rohrförmigen Stutzens (10) verbunden ist, und eine an die vorige anschließende, mit ihrem Innendurchmesser an den Außendurchmesser des Innenrohres (2) angepaßte, koaxial zu der ersten Ausnehmung gerichtete dritte Ausnehmung (8), die mit dem Inneren eines zweiten rohrförmigen Stutzens (9) verbunden ist, aufweist.

- 1 -

Dr.-Ing. Andreas Hampe
D-1000 Berlin 45

HP30.5-EU

## Erdwärmetauscherelement

## B e s c h r e i b u n g

Die Erfindung betrifft ein Erdwärmetauscherelement mit
einem Außen- und einem Innenrohr und einem als Formstück
ausgebildeten Sammelleitungs-Anschlußkopf, welcher die
Verbindung zwischen dem innerhalb des Erdreichs angeordneten Wärmetauscherelement und den Leitungen bildet, welche
für die Zu- und Abführung eines Wärmetransportmediums dienen.

/2

Ein derartiges einen Anschlußkopf aufweisendes Erdwärmetauscherelement ist aus der DE-Al-28 50 865 bekannt. Diese bekannten Wärmetauscher sind umständlich montierbar und weisen eine große Anzahl von die Leckgefahr erhöhenden Einzelteilen auf. Diese sind darüber hinaus kostspielig und außerdem sperrig, so daß der vergrößerte Umfang der erforderlichen Erdarbeiten noch zusätzlich kostensteigernd wirkt.

Der Erfindung liegt die Aufgabe zugrunde, bei einem Element der oben angegebenen Art eine Anschlußmöglichkeit zu den beiden der Zu- und Abfuhr des Wärmetransportmediums dienenden Sammelleitungen zu schaffen, die möglichst einfach aufgebaut und leicht zu handhaben ist. Darüberhinaus soll eine langanhaltende optimale Dichtigkeit der Anordnung einschließlich des Übergangs zu der Sammelleitung gegeben sein.

Diese Aufgabe wird erfindungsgemäß dadurch gelöst, daß der Anschlußkopf zur Aufnahme von Außen- und Innenrohr aufweist:

a)    eine an seine Außenfläche angrenzende, mit ihrem Innendurchmesser an den Außendurchmesser des Außenrohres angepaßte erste Ausnehmung,

b)    eine an die vorige anschließende, von dieser durch eine Durchmesserverringerung getrennte zweite Ausnehmung, welche mit dem Inneren eines ersten rohrförmigen Stutzens verbunden ist,

- 3 -

c)     eine an die vorige anschließende, mit ihrem Innendurchmesser an den Außendurchmesser des Innenrohres angepaßte, koaxial zu der ersten Ausnehmung gerichtete dritte Ausnehmung, die mit dem Inneren eines zweiten rohrförmigen Stutzens verbunden ist.

Der Erfindung liegt dabei die Erkenntnis zugrunde, daß zur optimalen Lösung dieser Aufgabe eine Vielzahl von Funktionen von einem einzigen Element, der Anschlußanordnung geleistet werden können, wenn es eine geeignete Ausformung erfährt.

Diese Funktionen sind:

a.     Verbindung der das Wärmetransportmedium zuführenden Sammelleitung mit einem Innenrohr des Erdwärmetauscherelements,

b.     Verbindung der das Wärmetransportmedium abführenden Sammelleitung mit dem zwischen Innen- und Außenrohr des Erdwärmetauscherelements gebildeten Hohlraum,

c.     Erzeugung eines Koaxial-Parallel-Übergangs,

d.     Toleranzausgleich zwischen Außen- und Innenrohr,

e.     Toleranzausgleich zwischen der Position des in das Erdreich eingebrachten Erdwärmetauscherelements und der in einem ausgehobenen Graben verlegten Sammelleitungen,

f.     Erzeugung einer einfach herstellbaren Anschlußmöglichkeit an die Sammelleitung an jeder beliebigen Stelle

/4

derselben ohne besondere Anschlußstücke oder aufwendige Arbeitsvorgänge,

g.    zeitbeständige Abdichtung des Übergangsbereichs.

Die erfindungsgemäße Anordnung erfüllt alle diese Voraussetzungen mit einer einfach herstell- und montierbaren Ausführung eines Erdwärmetauscherelements, welches eine weite Verbreitung von Erdwärmegewinnungsanlagen ermöglicht, da sich auch die Installationskosten gegenüber bestehenden Konzepten stark vermindern.

Dadurch, daß die erste Ausnehmung in Rohrrichtung zum Toleranzausgleich ein Übermaß aufweist, braucht beim Bemessen der koaxialen Rohre des Erdwärmetauscherelements keine übergroße Sorgfalt aufgewandt zu werden, während ein nachträgliches Verändern und Anpassen der Länge des Innenrohres umständlich wäre.

Die Fertigung des Anschlußkopfes aus einem nicht fließenden, weichelastischen Werkstoff hat den Vorteil, daß der Werkstoff des Kopfes selbst an allen Übergangsflächen zum anderen Element dichtend anliegt und weitere Dichtungsmaßnahmen nicht erforderlich sind. Bei einer eventuell nach Jahren notwendigen Reparatur werden mit dem Anschlußkopf zugleich auch alle Dichtungselemente ersetzt.

Durch eine im wesentlichen radial bis schräg nach oben zum Außenrohr gerichtete Anbringung der Stutzen ergibt sich eine günstige Handhabung beim Einbau und beim Ausgleich von Toleranzen. Eine bevorzugte Länge der Stutzen liegt dabei zwischen 100 und 200 mm. Derartige Abmessungen lassen sich auch ohne aufwendige Formwerkzeuge günstig fertigen.

Die Verbindung mit einem nahezu beliebigen, wegen der darauf einwirkenden mechanischen Beanspruchungen naturgemäß eine gewisse Mindeststeifigkeit aufweisenden - bevorzugt ebenfalls aus Polyethylen gefertigten - Rohren der Sammelleitungen wird dabei dadurch ermöglicht, daß in mindestens einen der Stutzen im Bereich seines freien Endes ein im Vergleich zu dem Material unelastisches rohrförmiges Quetschstück eingefügt ist, welches eine umlaufende Einschnürung aufweist. Für diese Verbindungsart ist es lediglich erforderlich, an beliebiger Stelle der Sammelleitung eine Bohrung entsprechenden, der Einschnürung angepaßten Durchmessers anzubringen. In diese Bohrung wird das freie Ende des entsprechenden Stutzens nur "eingesteckt" und die Verbindung ist hergestellt. Die erforderliche Dichtwirkung wird von dem das betreffende Quetschstück umgebenden elastischen Material der Anschlußanordnung erzeugt.

Der erfindungsgemäße Anschlußkopf ist bevorzugt aus einem weichelastischen Werkstoff gefertigt oder mit diesem überzogen, wobei dieser durch ein Elastomer gebildet wird.

Für eine Fertigung in großen Stückzahlen weist der Anschlußkopf (wie auch anhand des Ausführungsbeispiels ersichtlich) eine Aushöhlung auf, innerhalb der die an die Außenrohre angepaßten Ausnehmungen in der Weise vorgesehen sind, daß weiter innen gelegenen Öffnungsquerschnitte ver-

- 6 -

ringerte Abmessungen aufweisen, so daß der Anschlußkopf mittels einer (teilbaren) Form herstell- und aus dieser entnehmbar ist.

Wenn die Stutzen radial in bezug auf den Querschnitt des Außenrohrs ausgerichtet sind oder daran einander gegenüberliegend angeordnet sind, ist ein Anschluß an parallel verlaufende Sammelleitungen ohne Schwierigkeiten möglich.

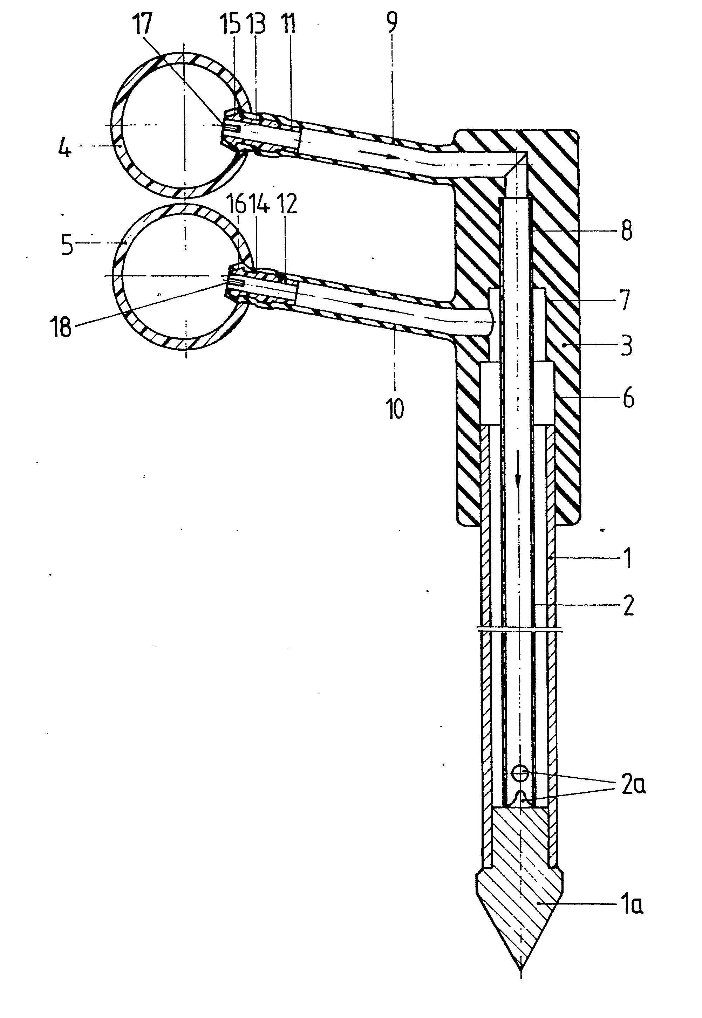

Andere vorteilhafte Weiterbildungen der Erfindung sind in den weiteren Unteransprüchen gekennzeichnet bzw. werden bei der nachstehenden Darstellung einer bevorzugten Ausführung näher beschrieben. Die einzige Figur zeigt die Ausführungsform des erfindungsgemäßen Erdwärmetauscherelements im Schnitt.

Das in der Figur verkürzt wiedergegebene Erdwärmetauscherelement besteht aus einem Außenrohr 1 aus verzinktem Stahl. Dieses Rohr ist so ausgebildet, daß es durch Rammen in das Erdreich eintreibbar und korrosionsbeständig ist. Darin koaxial eingefügt ist ein Innenrohr 2, welches - wie die übrigen Elemente der Anordnung - aus einem gegen (im Wärmetransportmedium enthaltenen) Methylenglykol und Alterung beständigen Werkstoff gefertigt ist. Als bevorzugtes Material wird dafür Polyethylen verwendet.

Der untere, gegebenenfalls noch eine Spitze und Verbindungselemente aufweisende Bereich des erfindungsgemäßen Erdwärmetauscherelements ist in der Zeichnung nur schematisch wiedergegeben, da er unterschiedlich ausgeführt sein kann. Bei der hier wiedergegebenen Ausführung ist das

/7

Außenrohr 1 mit einer dessen Ende verschließenden Spitze 1a versehen, welche gleichzeitig den Rammvorgang erleichtert. Für den Wärmetransport sind Durchlässe 2a im Innenrohr 2 vorgesehen.

Die das Wärmetransportmedium bildende Flüssigkeit, bevorzugt eine Salzsole mit einer Temperatur um den Gefrierpunkt, wird in einer ersten Sammelleitung 4 zugeführt, gelangt durch einen Anschlußkopf 3 in das Innenrohr 2 und wird durch dieses hindurch in die Tiefe gedrückt, um sich beim Aufsteigen im Zwischenraum der beiden koaxial verlaufenden Rohre 1 und 2 an der Innenwandung des Rohres 2, welches mit dem umgebenden Erdreich thermisch in Kontakt steht, zu erwärmen.

Das erwärmte Wärmetransportmedium gelangt über den Anschlußkopf 3 in eine weitere Sammelleitung 5, von wo aus es der Nutzung zugeführt wird.

Problematisch ist - wie dargestellt - in erster Linie der Anschluß der in das Erdreich versenkten Rohre des Wärmetauscherelementes an die Sammelleitungen. Diese werden innerhalb eines ausgehobenen Grabens auf dem Grundstück, dessen Erdwärme genutzt werden soll, verlegt und die Wärmetauscherelemente im Bereich dieser Leitungen in regelmäßigen Abständen in das Erdreich getrieben. Würde nun - wie bei anderen Leitungsnetzen - für jedes Wärmetauscherelement ein Abzweig als getrenntes Verzweigerelement in die Sammelleitungen 4 und 5 eingefügt, jeweils zwei Abzweigungen als Leitungen installiert und mit den Enden der Wärmetauscherrohre verbunden, so wäre der dabei zu leistende Aufwand erheblich, zumal wegen der Toleranzen bei der Verlegung die Orte der Verzweigungen und die Verzweigungsstrecken individuell abgemessen und hergestellt werden müßten.

Bei dem erfindungsgemäßen Erdwärmetauscherelement lassen sich alle Anschlüsse und Verbindungen ohne Schwierigkeiten herstellen, wobei der Anschlußkopf 3 selbst aus einem einzigen Element besteht, welches alle notwendigen Verbindungsfunktionen vereint. Eine erste Ausnehmung 6, welche an den Durchmesser des Außenrohres 1 angepaßt ist, nimmt dessen oberes Ende auf und liegt dabei dichtend am Rohr an. Über eine in ihrem Durchmesser verringerte weitere Kammer 7 ist eine Ausnehmung 8 angeschlossen, die das Innenrohr 2 aufnimmt. Die Längen der Ausnehmungen 6 und 8 in Rohrrichtung sind dabei zweckmäßigerweise so bemessen, daß auch bei Längentoleranzen der Rohre 1 bzw. 2 eine ausreichende Dichtung gewährleistet ist. Im dargestellten Ausführungsbeispiel ist die Ausnehmung 6 gegenüber der Ausnehmung 8 verlängert, so daß sie den notwendigen Längenausgleich sicherstellt. Die zwischen den Ausnehmungen 6 und 8 gelegene Ausnehmung 7 ist bezüglich der beiden anderen koaxial angeordnet, weist aber eine Durchmesserverringerung gegenüber der Ausnehmung 6 auf, damit sichergestellt ist, daß das Außenrohr 1 nicht in die Ausnehmung 7 gelangt, da in diesem Fall der Weg der Flüssigkeit zum Sammelrohr 5 beeinträchtigt werden könnte. Der Durchmesser der Kammer 7 ist wiederum größer als der Außendurchmesser des Innenrohres 2, damit letzteres noch von der Flüssigkeit umspült wird. Das Ende des Innenrohres 2 ist in die Ausnehmung 8 bis zu deren Ende eingeführt, wobei sich die Ausnehmung 8 mit einem verringerten Durchmesser als Öffnung eines Stutzens 9 fortsetzt, der von dem Anschlußkopf in horizontaler Richtung wegführt. Ein entsprechender rohrförmiger Stutzen 10 ist an die Ausnehmung 7 angeschlossen.

Der gesamte Anschlußkopf weist einerseits alterungsbeständige und gegen Erdbodenmikroben und Monoethylglykol resistente Eigenschaften auf und ist andererseits so elastisch, daß nicht nur die Dichtung der Rohranschlüsse gewährleistet ist, sondern daß diese auch zusätzlich zu ihrer Länge in Form und Durchmesser geringfügige Abweichungen aufweisen können, wie sie bei Herstellung, Transport und Eintreiben der Rohre in das Erdreich auftreten können.

Abweichungen, die bezüglich des Abstands der verlegten Sammelleitungen und der Anbringungsorte der Wärmetauscherelemente auftreten können, werden durch die Flexibilität der Stutzen 9 und 10 ausgeglichen. Da sie aus einem weichelastischen Werkstoff, bevorzugt Poly-2-Chlor-1,3-butadien-, Butadien, Acrylnitril- oder Silikon-Gummi bestehen, können sie im Bedarfsfall auch durch einfache Werkzeuge gekürzt werden. Diese Flexibilität ist deswegen von besonderem Vorteil, da die Sammelleitungen wegen der auf sie ausgeübten mechanischen Beanspruchungen von robusterer Ausführung sein sollten. Bevorzugt verwendet werden aus der Elektrotechnik unter dem Namen "Panzerrohre" bekannte Kunststoffrohre.

Besonders wesentlich für die einfache Montage sind in die Enden der Stutzen 9 und 10 eingefügte, feste rohrförmige Quetschhülsen 11 und 12, welche umlaufende Vertiefungen 13 bzw. 14 aufweisen, die in ihrer Breite an die maximale zu erwartende Materialstärke von Sammelleitungen angepaßt sind.

Um das Erdwärmetauscherelement an eine Sammelleitung anzuschließen, braucht in letztere lediglich eine Bohrung mit einem entsprechenden vorgegebenen Durchmesser eingefügt zu werden, die an den Außendurchmesser der Quetschhülsen 11 oder 12 angepaßt ist. Durch die in Richtung auf die freien Enden 15 und 16 hin vorgesehenen Verjüngungen, die am erweiterten Ende steilflankig in den umlaufenden Bereich einer Durchmesserverringerung 13 oder 14 übergehen, brauchen die Stutzen 9 und 10 nur noch in die nachträglich angebrachten Bohrungen der Sammelleitungen 4 bzw. 5 "eingesteckt" zu werden, wobei das elastische, die rohrförmigen Quetschhülsen 13 bzw. 14 überziehende Material gleichzeitig die Funktion einer dauerhaften Dichtung übernimmt. Die steilen, umlaufenden rückwärtigen Kanten verhindern ein unbeabsichtigtes Lösen der "Steckverbindung". In den freien Enden vorgesehene, in Längsrichtung verlaufende Schlitze 17 und 18 ist ein "Einstecken" der Enden der Stutzen 9 und 10 auch in Rohre 4 und 5 aus nicht nachgiebigem Material möglich.

Damit besteht eine nahezu völlige Freiheit bei der Einbringung der Wärmetauscherelemente, wobei gegebenenfalls nachträglich auch weitere Elemente zugefügt oder entfernt werden können. Im letzteren Fall ist es lediglich erforderlich, die dann überflüssigen Bohrungen in den Sammel-

- 11 -

leitungen 4 und 5 mit Stopfen, welche - im Sinne eines aufeinander abgestimmten Systems von Elementen - zu diesem Zweck vorrätig gehalten werden können, zu verschließen. Durch die Verwendung von Sammelleitungen der obengenannten Art aus einem relativ steifen elastischen Material ist der auf die Quetschstücke 11 und 12 ausgeübte Anpreßdruck und damit die notwendige Dichtigkeit auch auf Dauer sicherge-stellt.

* * * * *

0046726

- 12 -

<u>P a t e n t a n s p r ü c h e</u>

1. Erdwärmetauscherelement mit einem Außen- und einem Innenrohr und einem als Formstück ausgebildeten Sammel-leitungs-Anschlußkopf,

d a d u r c h   g e k e n n z e i c h n e t ,

daß der Anschlußkopf (3) zur Aufnahme von Außen- und Innenrohr (1 bzw. 2) aufweist:

a) eine an seine Außenfläche angrenzende, mit ihrem Innendurchmesser an den Außendurchmesser des Außenrohres angepaßte erste Ausnehmung (6),

b) eine an die vorige anschließende, von dieser durch eine Durchmesserverringerung getrennte, zweite Ausnehmung (7), welche mit dem Inneren eines ersten rohrförmigen Stutzens (10) verbunden ist,

c) eine an die vorige anschließende, mit ihrem Innendurchmesser an den Außendurchmesser des Innenrohres (2) angepaßte, koaxial zu der ersten Ausnehmung gerichtete dritte Ausnehmung (8), die mit dem Inneren eines zweiten rohrförmigen Stutzens (9) verbunden ist.

2. Erdwärmetauscherelement nach Anspruch 1, d a -d u r c h   g e k e n n z e i c h n e t , daß der An-schlußkopf (3) aus einem weichelastischen Werkstoff gefertigt oder mit diesem überzogen ist.

/13

3.    Erdwärmetauscherelement nach Anspruch 2, d a -
d u r c h   g e k e n n z e i c h n e t , daß der weichelastische Werkstoff durch ein Elastomer gebildet wird.

4.    Erdwärmetauscherelement nach einem der vorangehenden
Ansprüche, d a d u r c h   g e k e n n z e i c h n e t ,
daß die erste oder dritte Ausnehmung (6 bzw. 8) in Rohrrichtung zum Ausgleich von Rohrlängentoleranzen ein Übermaß aufweist.

5.    Erdwärmetauscherelement nach einem der vorangehenden
Ansprüche, d a d u r c h   g e k e n n z e i c h n e t ,
daß der Anschlußkopf (3) eine Aushöhlung aufweist, innerhalb der die an die Außenrohre (1, 2) angepaßten Ausnehmungen in der Weise vorgesehen sind, daß die Abmessungen
der weiter innen gelegenen Öffnungsquerschnitte verringert
sind, so daß der Anschlußkopf (3) mittels einer teilbaren
Form herstell- und aus dieser entnehmbar ist.

6.    Erdwärmetauscherelement nach einem der vorangehenden
Ansprüche, d a d u r c h   g e k e n n z e i c h n e t ,
daß die Stutzen (9, 10) radial in bezug auf den Querschnitt des Außenrohrs (1) ausgerichtet sind.

7.    Erdwärmetauscherelement nach Anspruch 6, d a -
d u r c h   g e k e n n z e i c h n e t , daß die Stutzen
(9, 10) gleichgerichtet oder um 180° versetzt am Anschlußkopf (3) angeordnet sind.

8.   Erdwärmetauscherelement nach einem der vorangehenden Ansprüche, d a d u r c h   g e k e n n z e i c h n e t , daß die Länge der Stutzen (9, 10) zwischen 100 und 200 mm beträgt.

9.   Erdwärmetauscherelement nach einem der vorangehenden Ansprüche, d a d u r c h   g e k e n n z e i c h n e t , daß in mindestens einen der Stutzen (9, 10) im Bereich seines freien Endes (15, 16) ein im Vergleich zum Material des Anschlußkopfes (3) oder dessen Überzugs wesentlich unelastischeres rohrförmiges Quetschstück (11, 12) eingefügt ist, welches eine umlaufende Einschnürung (13, 14) aufweist.

10.   Erdwärmetauscherelement nach Anspruch 9, d a - d u r c h   g e k e n n z e i c h n e t ,   daß das Quetschstück (11, 12) in Richtung auf seinem dem freien Ende (15, 16) des Stutzens zugewandten Ende kegelförmig verjüngt ist.

11.   Erdwärmetauscherelement nach einem der Ansprüche 9 oder 10, d a d u r c h   g e k e n n z e i c h n e t , daß das Quetschstück (11, 12) an seinem dem freien Ende des Stutzens zugewandten Ende (15, 16) in Längsrichtung verlaufende Schlitze aufweist.

12.   Erdwärmetauscherelement nach den Ansprüchen 10 und 11, d a d u r c h   g e k e n n z e i c h n e t ,   daß der

kegelförmig verjüngte Bereich des Quetschstücks (11, 12) an seinem dem freien Ende des Stutzens (15, 16) abgewandten Ende an die umlaufende Einschnürung mit einer steilen Kante angrenzt.

13. Erdwärmetauscherelement nach einem der vorangehenden Ansprüche, d a d u r c h  g e k e n n z e i c h n e t , daß der Anschlußkopf (3) und der Stutzen (15, 16) aus einem gegen Erdbodenmikroben und Monoethylglykol resistenten Werkstoff gefertigt sind.

14. Erdwärmetauscherelement nach Anspruch 13, d a - d u r c h  g e k e n n z e i c h n e t , daß es sich bei dem Werkstoff um Poly-2-Chlor-1,3-butadien-, Butadien, Acrylnitril- oder Silikon-Gummi handelt.

* * * * *

0046726

**0046726**

Nummer der Anmeldung

EP 81 73 0082

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 149 044 (BONNAVION) <br> * Seite 1, Zeilen 12-20; Figur 1 * | 1 |
| | CH - A - 474 659 (KLEMM) <br> * Spalte 3, Zeile 45 - Spalte 4, Zeile 33; Figur 2 * | 1 |
| P | DE - A - 2 928 414 (HAMPE) <br> * Seite 6, Absatz 2; Bild 2 * | 1,2 |
| | FR - A - 1 559 545 (A.M.P.) <br> * Seite 4, Zeilen 23-44; Figur 9 * | 9 |
| P | US - A - 4 232 421 (TUCKER) <br> * Die ganze Spalte 2, Figur 1 * | 9 |
| A | GB - A - 2 016 139 (KYOTO) <br> * Insgesamt * | |

**KLASSIFIKATION DER ANMELDUNG (Int. Cl.³)**

F 24 J   3/02
F 16 L 39/00
       37/00

**RECHERCHIERTE SACHGEBIETE (Int. Cl.³)**

F 24 J
F 16 L
E 21 B
F 28 D

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-11-1981 | PERROTTA |

EPA form 1503.1   06.78